# EUROPÄISCHE PATENTSCHRIFT

(11) **EP 3 766 714 B1**
(45) Veröffentlichungstag und Bekanntmachung des Hinweises auf die Patenterteilung: **06.09.2023**
(21) Anmeldenummer: 20185593.9
(22) Anmeldetag: 14.07.2020
(51) Int. Cl.: B60J 5/06

(54) **VORRICHTUNG ZUM SPANNEN EINER HÖHENVERSTELLBAREN PLANE EINES NUTZFAHRZEUGAUFBAUS, NUTZFAHRZEUGAUFBAU UND NUTZFAHRZEUG**
COMMERCIAL VEHICLE SUPERSTRUCTURE, COMMERCIAL VEHICLE AND DEVICE FOR TENSIONING A HEIGHT-ADJUSTABLE TARPAULIN OF A COMMERCIAL VEHICLE SUPERSTRUCTURE
DISPOSITIF DE SERRAGE D'UNE BÂCHE RÉGLABLE EN HAUTEUR D'UNE STRUCTURE DE VÉHICULE UTILITAIRE, STRUCTURE DE VÉHICULE UTILITAIRE ET VÉHICULE UTILITAIRE

(30) Priorität: 19.07.2019 DE 102019119628
(43) Veröffentlichungstag der Anmeldung: 20.01.2021
(73) Patentinhaber: Kögel Trailer GmbH, 89349 Burtenbach (DE)
(72) Erfinder: BROLL, Tobias, 86381 Krumbach-Billenhausen (DE); KALISCHKO, Thomas, 86470 Thannhausen (DE)
(74) Vertreter: Meissner Bolte Partnerschaft mbB

(56) Entgegenhaltungen:
- DE-A1-102013 107 455
- DE-B3-102006 044 208

## Beschreibung

Die Erfindung betrifft eine Vorrichtung zum Spannen einer höhenverstellbaren Plane eines Nutzfahrzeugaufbaus, einen Nutzfahrzeugaufbau und ein Nutzfahrzeug.

Planensattelauflieger werden immer häufiger mit Hubdächern bzw. höhenverstellbaren Dächern eingesetzt, um eine größere Flexibilität für den Transport von Gütern bereitstellen zu können. Der Umfang der Höhenverstellbarkeit wird dabei zunehmend größer.

Um verschiedene Höhenverstellungen realisieren zu können, muss die Seitenplane in der höchsten Dachstufe über den Außenrahmen des Nutzfahrzeugaufbaus reichen, sodass eine Befestigung mit den Planenspannern möglich ist. In der niedrigsten Dachstufe ergibt sich jedoch ein großer Überstand der Plane unterhalb des Außenrahmens.

Ferner werden Wickelwellen an den horizontalen Enden der Seitenplane zum Spannen der Seitenplane benötigt. Die Spannvorrichtung ist fest am Außenrahmen angebracht, meist in Form einer Spannratsche oder eines Spannhebels. Jedoch ist die Plane an ihrem oberen Ende fixiert, wohingegen die Wickelwelle an ihrem unteren Ende fixiert ist. Somit muss die Plane in der Wickelwelle nach oben und unten verschiebbar ausgebildet sein.

Zudem erfolgt die Fixierung am oberen Ende der Plane mit Hilfe von Gegenhaltern, entlang der die Plane einen Planenausschnitt aufweisen muss. Im Bereich dieses Planenausschnitts ist die Seitenplane somit nicht geführt, sodass hier Falten entstehen können, sowie auch ein Wassereintritt möglich ist.

Teleskopierbare Wickelwellen sind beispielsweise aus DE 10 2107 73 C1 oder DE 10 2006 044 208 B3 bekannt. Derartige Wickelwellen werden jedoch nur selten eingesetzt, insbesondere da sie technisch aufwändig und damit teuer in der Herstellung sind.

Der Erfindung liegt die Aufgabe zu Grunde eine Vorrichtung zum Spannen einer höhenverstellbaren Plane eines Nutzfahrzeugaufbaus bereitzustellen, die einfach und günstig herzustellen ist, die Übertragung hoher Kräfte und Momente gewährleistet, einen geringen Aufwand zur Instandhaltung erfordert sowie die variable Einstellung unterschiedlichster Höhen zum Spannen einer Plane ermöglicht. Des Weiteren soll mittels der vorliegenden Erfindung einem Wassereintritt sowie einer unvorteilhaften Faltenbildung der Plane, insbesondere auch im Falle von großen Bereichen zur Höhenverstellung, vorgebeugt werden. Ferner ist es Aufgabe der Erfindung einen Nutzfahrzeugaufbau sowie ein Nutzfahrzeug anzugeben.

Diese Aufgabe wird hinsichtlich der Vorrichtung zum Spannen einer höhenverstellbaren Plane durch den Gegenstand des Anspruchs 1 gelöst, hinsichtlich des Nutzfahrzeugaufbaus durch den Gegenstand des Anspruchs 8 und hinsichtlich des Nutzfahrzeuges durch den Gegenstand des Anspruchs 15. Bevorzugte Ausführungsformen sind jeweils in den abhängigen Ansprüchen angegeben.

Gemäß der vorliegenden Erfindung ist eine Vorrichtung zum Spannen einer höhenverstellbaren Plane eines Nutzfahrzeugaufbaus mit einem Spannelement und wenigstens einer Wickelwelleneinheit vorgesehen. Die Wickelwelleneinheit ist mit dem Spannelement kraft- und/oder form- und/oder reibschlüssig verbunden, zum Aufbringen eines Drehmomentes auf die Wickelwelleneinheit entlang einer Längsachse der Wickelwelleneinheit. Die Wickelwelleneinheit weist wenigstens eine erste Hauptwelle, mit einem ersten Hauptwellenende und einem zweiten Hauptwellenende, und wenigstens eine erste Schiebewelle, mit einem ersten Schiebewellenende und einem zweiten Schiebewellenende, auf, wobei die erste Hauptwelle und die erste Schiebewelle jeweils als eine geschlitzte Hohlwelle mit einem Innenprofil zur Aufnahme wenigstens eines Keders einer Plane ausgebildet sind und wobei die erste Schiebewelle in dem Innenprofil der erste Hauptwelle aufgenommen ist und ein Außenprofil der ersten Schiebewelle derart in das Innenprofil der ersten Hauptwelle eingreift, insbesondere kraft- und/oder formschlüssig eingreift, dass die erste Schiebewelle und die erste Hauptwelle ausschließlich in Längsrichtung zueinander bewegbar sind.

Die Erfindung basiert auf der Idee, dass eine höhenverstellbare bzw. teleskopierbare Wickelwelleneinheit mittels zweier einfach ausgestalteter und ineinander angeordneter Wickelwellen realisiert wird. Dabei ermöglicht eine einfache Ausgestaltung der einzelnen Wickelwellen, im Sinne der wenigstens einen ersten Hauptwelle und der wenigstens einen ersten Schiebewelle, eine kostengünstige Herstellung sowie wartungsarme und zugleich stabile Konstruktion. Darüber hinaus kann vorzugsweise eine stufenlose Höhenverstellung mittels der erfindungsgemäßen Vorrichtung bereitgestellt werden.

Unter einer einfachen Ausgestaltung der ersten Schiebewelle bzw. der ersten Hauptwelle wird im Rahmen der vorliegenden Erfindung insbesondere die Vermeidung zusätzlicher Bearbeitungsschritte im Sinne einer spanenden oder spanlosen Nachbearbeitung zur Ausgestaltung von ergänzenden Strukturen oder dergleichen entlang der Wickelwellen verstanden.

Die erfindungsgemäße Vorrichtung sieht vor, dass die erste Hauptwelle und die erste Schiebewelle jeweils als geschlitzte Hohlwelle mit einem Innenprofil zur Aufnahme wenigstens eines Keders einer Plane ausgebildet sind, wobei die erste Schiebewelle in dem Innenprofil der erste Hauptwelle aufgenommen ist und ein Außenprofil der ersten Schiebewelle derart in das Innenprofil der ersten Hauptwelle eingreift, insbesondere kraft- und/oder formschlüssig eingreift, dass die erste Schiebewelle ausschließlich in Längsrichtung der ersten Hauptwelle bewegbar ist.

Die Ausbildung der ersten Hauptwelle und der ersten Schiebewelle als geschlitzte Hohlwellen mit einem Innenprofil bedeutet, dass die Wickelwellen der Wickelwelleneinheit jeweils einen hohlen Innendurchmesser aufweisen. Des Weiteren sind die Profile der Hauptwelle und der Schiebewellen jeweils über ihre gesamte Längserstreckung geschlitzt bzw. weisen einen durchgehenden Zugangsschlitz auf.

Die Zugangsschlitze bzw. schlitzförmigen Zugangsöffnungen der ersten Hauptwelle und der ersten Schiebewelle sind im zusammengesetzten Zustand der Wickelwelleneinheit übereinanderliegend vorgesehen. So kann die Plane von außen durch die schlitzförmigen Zugangsöffnungen hindurch bis in das Innenprofil der ersten Schiebewelle bzw. der ersten Hauptwelle hineinragen.

Es ist erfindungsgemäß vorgesehen, dass die erste Schiebewelle in der ersten Hauptwelle, insbesondere in dem Innenprofil der ersten Hauptwelle, verschiebbar angeordnet ist. Die Verschiebung bzw. Relativverschiebung der ersten Hauptwelle gegenüber der ersten Schiebewelle kann dabei lediglich in Längsrichtung, also entlang einer Längsachse der Wickelwelleneinheit, erfolgen. Demnach ist insbesondere eine Rotation bzw. Relativrotation zwischen der ersten Hauptwelle und der ersten Schiebewelle unterbunden bzw. blockiert.

Das Blockieren einer Rotation bzw. Relativrotation zwischen der ersten Hauptwelle und der ersten Schiebewelle wird erreicht, indem das Außenprofil bzw. eine Außenstruktur der ersten Schiebewelle kraft- und/oder formschlüssig in die erste Hauptwelle eingreift. Dieser Eingriff ist vorzugsweise derart ausgestaltet, dass ein zerstörungsfreies Durchrutschen der kraft- und/oder formschlüssigen Verbindung ausgeschlossen werden kann.

Beispielsweise kann eine sichere, zweckmäßige Verbindung zwischen der ersten Hauptwelle und der ersten Schiebewelle mittels einer Rechteckverzahnung, die rechtwinklig ausgestalte Flanken aufweist, erreicht werden. Solche Rechteckverzahnungen sind insbesondere zur Übertragung hoher Drehmomente geeignet.

Alternativ können anderweitig ausgestaltete Nut- und Nasenstrukturen vorgesehen sein, um eine Längsverschieblichkeit zwischen der wenigstens einen ersten Hauptwelle und der wenigstens einen ersten Schiebewelle bereitzustellen.

Auf vorteilhafte Weise kann somit eine Längsverschiebung zwischen den Wickelwellen einer Wickelwelleneinheit, also der wenigstens einen ersten Hauptwelle und der wenigstens einen ersten Schiebewelle, bereitgestellt werden, wobei gleichzeitig ein einfacher Aufbau und eine kostengünstige Herstellung der jeweiligen Wickelwellenprofile gewährleistet ist.

Im Sinne der vorliegenden Erfindung ist ferner unter der Verbindung des Spannelementes mit der Wickelwelleneinheit insbesondere zu verstehen, dass das Spannelement und die Wickelwelleneinheit, insbesondere das Spannelement und die erste Hauptwelle, vorzugsweise auf lösbare Weise miteinander verbindbar sind, wobei die Einwirkung einer Kraft bzw. eines Moments auf das Spannelement direkt und unmittelbar auf die Wickelwelleneinheit bzw. die erste Hauptwelle einwirkt. Dies führt zu einer rotatorischen Bewegung der Wickelwelleneinheit, insbesondere ohne dass ein zusätzliches Kraftübertragungselement zwischen Spannelement und Wickelwelle eingesetzt wird. Somit erfolgt eine unmittelbare und vorzugsweise verlustfreie Kraftübertragung von dem Spannelement auf die Wickelwelleneinheit, um die Plane des Nutzfahrzeugaufbaus auf vorteilhafte Weise aufwickeln bzw. spannen zu können. Ferner wird die Anzahl an Einzelkomponenten zur Bereitstellung einer Vorrichtung zum Spannen einer Plane reduziert.

Das Spannelement kann mit einer Ratsche, einer Kurbel oder dergleichen ausgestaltet sein. Im Zuge der rotatorischen Bewegung der Wickelwelle ist die in der Wickelwelle aufgenommene Plane somit wenigstens teilweise auf der Wickelwelleneinheit aufrollbar bzw. aufwickelbar. Durch die Betätigung des Spannelementes ist es möglich die Wickelwelleneinheit zu rotieren und die Plane auf der Wickelwelleneinheit insbesondere schrittweise wenigstens teilweise aufzurollen. So wird im Kontext eines Nutzfahrzeugaufbaus die Plane gespannt.

Die Plane ist mit dem Keder in der Wickelwelleneinheit aufnehmbar und geführt. Der Keder der Plane ist in dem Innenprofil insbesondere in Längsrichtung der ersten Hauptwelle und/oder der ersten Schiebewelle bewegbar. Bevorzugter Weise ist die Plane mit dem Keder kraft- und/oder formschlüssig in der Wickelwelleneinheit aufgenommen. Die Innenprofile der ersten Hauptwelle und der ersten Schiebewelle sind als Hohlprofile, als Hohlräume oder als vergleichbare Materialaussparungen innerhalb der Hauptwelle bzw. Schiebewelle vorgesehen.

Die Plane kann somit anhand ihres Keders in die Innenprofile der ersten Hauptwelle bzw. der ersten Schiebewelle eingezogen werden, ragt hierbei durch die schlitzförmige Zugangsöffnung in die Innenprofile hinein und ist auf diese Weise sicher in der Wickelwelleneinheit aufgenommen. Insbesondere kann die Plane mit dem Keder ausschließlich entlang der Verlaufsrichtung der schlitzförmigen Zugangsöffnung bzw. der Innenprofile wieder aus den Innenprofilen ausgezogen und von der Wickelwelleneinheit getrennt werden.

Des Weiteren ist vorgesehen, dass sich die schlitzförmige Zugangsöffnung vorzugsweise über die gesamte Länge der Wickelwelle erstreckt. Es ist somit ein Vorteil, dass die Plane mit dem Keder von beiden Enden der Wickelwelleneinheit aus in die Innenprofile eingebracht bzw. eingezogen werden kann. Ferner ist es durch eine solche Ausgestaltung der schlitzförmigen Zugangsöffnung vorstellbar, das Spannelement an einem beliebigen Ende mit der Wickelwelle zu verbinden bzw. auf ein beliebiges Ende der Wickelwelle aufzusetzen.

Die Innenprofile der ersten Hauptwelle bzw. der ersten Schiebewelle sind über die jeweilige schlitzförmige Zugangsöffnung entlang der kompletten Länge der Wickelwelleneinheit von außen zugänglich, sodass sich die Plane durch die schlitzförmigen Zugangsöffnungen in die Innenprofile hinein erstrecken kann. Die Innenprofile und die schlitzförmigen Zugangsöffnungen bilden somit zusammen nutförmige Materialaussparungen in Längsrichtung der Wickelwelleneinheit aus.

Die Breite der schlitzförmigen Zugangsöffnungen ist insbesondere kleiner gewählt als die Breite bzw. der Durchmesser des Keders. So sind die Innenprofile insbesondere dazu geeignet, den Keder der Plane derart formschlüssig aufzunehmen, dass die Plane mit dem Keder nicht über die schlitzförmigen Zugangsöffnungen von der Wickelwelleneinheit getrennt werden kann. Die Plane ist ausschließlich in Längsrichtung der Wickelwelleneinheit entlang der Innenprofile und der schlitzförmigen Zugangsöffnungen aus der Wickelwelleneinheit ausziehbar bzw. entfernbar.

Erfindungsgemäß weisen das Innenprofil der ersten Hauptwelle wenigstens eine Nutstruktur, insbesondere mehrere radial verteilte rechteckförmige Längsnuten, und die erste Schiebewelle ein Außenprofil mit wenigstens einer korrespondierenden Nasenstruktur, insbesondere mehreren radial verteilten, rechteckförmigen Längsnasen, zur Ausbildung eines kraft- und/oder formschlüssigen Eingriffs der ersten Schiebewelle mit der ersten Hauptwelle auf.

Indem das Innenprofil der Hauptwelle und das Außenprofil der ersten Schiebewelle zueinander korrespondierend ausgestaltet sind, ist ein zweckmäßiger Eingriff zur Verschränkung miteinander und Sperrung einer Relativrotation möglich. Anhand der korrespondierenden Strukturen wird lediglich eine Längsverschiebung der ersten Hauptwelle und der ersten Schiebewelle gegenüber einander erlaubt. Somit ist ein zweckmäßiges Drehmoment zum Spannen einer Plane für einen Nutzfahrzeugaufbau entlang der Wickelwelleneinheit übertragbar bzw. applizierbar.

Gemäß einer bevorzugten Ausführungsform ist wenigstens eine Fixierkomponente mit der ersten Schiebewelle und/oder der ersten Hauptwelle verbindbar zur Fixierung der Position der ersten Hauptwelle in Längsrichtung gegenüber der ersten Schiebewelle.

Anhand der Fixierkomponente ist somit eine vorzugsweise variable, beliebige Relativposition bzw. Relativverschiebung fixierbar bzw. dauerhaft einstellbar. Die Plane bzw. der Nutzfahrzeugaufbau kann mittels der erfindungsgemäßen Vorrichtung auf eine gewünschte Höhe eingestellt werden.

Bevorzugter Weise ist vorgesehen, dass die erste Schiebewelle an dem Außenrahmen fixiert ist und die erste Hauptwelle gegenüber der ersten Schiebewelle in Längsrichtung verschoben wird, um eine Höhenverstellung der Vorrichtung und eines zugehörigen Nutzfahrzeugaufbaus zu erzielen. Alternativ kann die erste Schiebewelle gegenüber der ersten Hauptwelle längsverschoben werden.

Nach einer weiteren Ausführungsform ist die wenigstens eine Fixierkomponente derart ausgebildet, insbesondere als ein Nutenstein ausgebildet, sodass die Fixierkomponente in das Innenprofil der ersten Schiebewelle einbringbar ist und mit dem Innenprofil der ersten Schiebewelle derart kraft- und/oder formschlüssig verschränkbar ist, dass das Innenprofil der ersten Schiebewelle in Längsrichtung blockiert ist, insbesondere für eine Hindurchführung des Keders der Plane durch das Innenprofil der ersten Schiebewelle blockiert ist.

Demnach ist vorgesehen, dass eine gewünschte Höhenposition der ersten Schiebewelle gegenüber der ersten Hauptwelle einstellbar ist. Die Höhenposition bzw. Relativposition wird fixiert, indem die wenigstens eine Fixierkomponente über die schlitzförmigen Zugangsöffnungen der Wickelwellen bzw. der ersten Hauptwelle und der ersten Schiebewelle bis in den Innendurchmesser der ersten Schiebewelle eingebracht wird. In der Folge sperrt die Fixierkomponente das Innenprofil bzw. den inneren Hohlraum der ersten Schiebewelle ab, sodass der Keder der Plane nicht mehr hindurchgeführt werden kann. Auf diese Weise kann der Keder einer Plane bzw. die Plane mittels der eingebrachten Fixierkomponente mitgeführt werden oder ein Herabfallen der Plane vermieden werden.

Die Wickelwelleneinheit und die Plane sind in ihrer Position zueinander fixiert, zumindest entlang eines Teils der Wickelwelleneinheit, insbesondere entlang der ersten Schiebewelle.

In einer weiteren bevorzugten Ausführungsform sind die erste Hauptwelle und die erste Schiebewelle jeweils als Strangpressprofile oder als Extrusionsprofile ausgebildet.

Unter Berücksichtigung der Ausbildung des Innenprofils, der schlitzförmigen Zugangsöffnung und des Hohlkanals in Längsrichtung der ersten Hauptwelle und der ersten Schiebewelle, sind die Wickelwellen der Wickelwelleneinheit erfindungsgemäß und auf vorteilhafte Weise in einem kontinuierlichen Prozess herstellbar. Die Wickelwellen können beliebig dimensioniert bzw. konfektioniert werden. Es wird eine fortlaufende und kostengünstige Herstellung der Wickelwelleneinheit, insbesondere der wenigstens einen ersten Hauptwelle und der wenigstens einen ersten Schiebewelle, ermöglicht.

Vorzugsweise ist vorgesehen, dass die Wickelwelle und das Spannelement aus Aluminium hergestellt sind. Es ist gleichfalls auch möglich, die Wickelwelle und das Spannelement aus Stahl, Edelstahl oder einem anderen geeigneten Material herzustellen.

In einer Ausführungsform weisen die erste Hauptwelle und die erste Schiebewelle identische Längen oder unterschiedliche Längen auf, insbesondere sodass die erste Schiebewelle kürzer ist als die erste Hauptwelle.

Demnach kann eine beliebige Expandierbarkeit der Wickelwelleneinheit bereitgestellt werden, oder eine kompakte Bauform bei der die erste Hauptwelle die erste Schiebewelle in Längsrichtung vollständig aufnimmt.

Insbesondere kann die Länge der ersten Schiebewelle derart gewählt werden, dass eine gewünschte maximale Expandierbarkeit der Vorrichtung bereitgestellt werden kann. Hierbei weist die erste Schiebewelle vorzugsweise eine hinreichend lange Überdeckung mit der ersten Hauptwelle auf, um eine Stabilität der Vorrichtung zwischen der ersten Hauptwelle und der ersten Schiebwelle im expandierten Zustand sicherstellen zu können.

Nach einer Ausführungsform ist eine zweite Schiebewelle vorgesehen, wobei die erste Schiebewelle und die zweite Schiebewelle in Längsrichtung der Hauptwelle übereinander angeordnet sind, und die zweite Schiebewelle insbesondere in dem Bereich des zweiten Hauptwellenendes angeordnet ist.

Die zweite Schiebewelle kann hierbei insbesondere als eine mechanische Stabilisierung am zweiten Hauptwellenende der ersten Hauptwelle einsetzbar sein. Somit ist eine stabile Vorrichtung für einen Nutzfahrzeugaufbau und zur Übertragung geeigneter Drehmomente verfügbar, um ein zweckmäßiges Spannen der Plane des Nutzfahrzeugsaufbaus zu ermöglichen.

In einem nebengeordneten Aspekt der Erfindung ist ein Nutzfahrzeugaufbau, insbesondere für den Einsatz mit Nutzfahrzeugen wie Sattelauflieger oder Sattelaufliegergespannen, mit einer Plane vorgesehen, geeignet zum Verschließen und Freigeben einer Ladeöffnung, und mit einer erfindungsgemäßen Vorrichtung.

Des Weiteren ist in einer Ausführungsform vorgesehen, dass die Plane abschnittsweise mit der Wickelwelleneinheit verbindbar ist, insbesondere im Bereich des ersten Schiebewellenendes mit der ersten Schiebewelle verbindbar ist.

Demnach ist vorgesehen, dass die Plane nur teilweise in der Wickelwelleneinheit, insbesondere der ersten Schiebewelle und/oder der ersten Hauptwelle, aufgenommen ist, um eine zweckmäßiges Spannen der höhenverstellbaren Plane zu ermöglichen. Vorzugsweise ist die Plane derart mit der ersten Schiebewelle verbunden, dass keine Relativbewegung zwischen der Plane und der ersten Schiebewelle möglich ist. Zur Höheneinstellung erfolgt eine Verschiebung der ersten Schiebewelle mit der Plane gegenüber der Hauptwelle. Alternativ kann die Plane an der ersten Hauptwelle derart fixiert sein.

In einer weiteren Ausführungsform ist die Plane an wenigstens einem horizontalen Ende mit wenigstens einem Keder zur geführten Aufnahme in der Wickelwelleneinheit, insbesondere in dem Innenprofil der ersten Hauptwelle und/oder der ersten Schiebewelle, ausgestaltet, wobei die Plane entlang des Keders wenigstens einen Ausschnitt aufweist, sodass eine Mehrzahl von Kederabschnitten ausgebildet ist.

Die Plane bzw. der Keder der Plane kann somit einen oder mehrere Ausschnitte aufweisen. Dazu korrespondierend weist die Plane zwei oder mehrere Kederabschnitte auf. Der Keder in Form von mehreren Kederabschnitten ist zweckmäßig geführt in den Innenprofilen bzw. Innendurchmessern der Wickelwelleneinheit, also der ersten Hauptwelle und der ersten Schiebewelle, geführt.

Der Keder bzw. die Kederabschnitte sind derart ausgestaltet, dass die Plane über das erste Schiebewellenende oder das zweite Hauptwellenende eingezogen werden kann. Der Keder bzw. die Kederabschnitte können nicht über die schlitzförmige Zugangsöffnung aus der Wickelwelleneinheit entnommen werden. Lediglich die Plane kann durch die schlitzförmigen Zugangsöffnungen der ersten Hauptwelle und der ersten Schiebewelle bis in die Innenprofile hineinragen. Somit ist es möglich, die aufgenommene Plane mit dem Keder bzw. den Kederabschnitten anhand der Wickelwelleneinheit zweckmäßig zu spannen.

In einer bevorzugten Ausführungsform ist die wenigstens eine Fixierkomponente zum kraft- und/oder formschlüssigen Eingriff mit der Wickelwelleneinheit, insbesondere mit der ersten Schiebewelle und/oder der ersten Hauptwelle, und wenigstens einem der Kederabschnitte vorgesehen, sodass
- die Plane bei einer Längsbewegung zwischen der ersten Schiebewelle und der ersten Hauptwelle mitführbar ist, und/oder
- eine Längsbewegung zwischen der ersten Schiebewelle und der ersten Hauptwelle, insbesondere in Kombination mit der Plane, begrenzbar ist.

Demnach kann anhand der wenigstens einen Fixierkomponente die Plane mit einem zugeordneten Kederabschnitt im Zuge einer Expansion der ersten Schiebewelle mitgeführt werden, um den Nutzfahrzeugaufbau in seiner Höhe auszufahren. Des Weiteren kann eine Expansion bzw. ein Ausfahren der ersten Schiebewelle durch Einbringen einer Fixierkomponente begrenzt werden.

Die Fixierkomponenten sind demnach in Kombination mit den Ausschnitten der Plane bzw. den Kederabschnitten vorgesehen. Pro Planenausschnitt können zwei Fixierkomponenten vorgesehen sein, um eine minimale und eine maximale Expansion bzw. Relativposition der ersten Schiebewelle gegenüber der ersten Hauptwelle zu begrenzen.

Nach einer Ausführungsform weist die Plane an einem unteren Endbereich, im Bereich des zweiten Hauptwellenendes, wenigstens eine Raffeinheit auf, insbesondere mit einer Klemmratsche und einem Gurt, sodass ein überstehender Teil der Plane bedarfsweise zusammenraffbar ist.

Sofern die Plane in einer Höheneinstellung über das untere Ende bzw. den unteren Außenrahmen des Nutzfahrzeugaufbaus hinausragt, kann die Plane somit auf vorteilhafte Weise zusammengefaltet bzw. zusammengelegt und fixiert werden.

Gemäß einer weiteren Ausführungsform ist die Plane eine Seitenplane des Nutzfahrzeuges.

Somit ist die erfindungsgemäße Vorrichtung bzw. der erfindungsgemäße Nutzfahrzeugsaufbau für die Verwendung mit großflächigen, schweren Planen bzw. Seitenplanen geeignet.

In einer Ausführungsform ist die erste Hauptwelle an dem zweiten Hauptwellenende fixiert, insbesondere mit dem Spannelement mittelbar oder unmittelbar verbunden, und die erste Schiebewelle ist an dem ersten Schiebewellenende fixiert, insbesondere an einem Gegenhalterelement des Nutzfahrzeugaufbaus mittelbar oder unmittelbar befestigt.

Somit ist die Wickelwelleneinheit an beiden Endseiten zweckmäßig fixiert, sodass ein Einfahren und Ausfahren des Nutzfahrzeugaufbaus durch eine Relativverschiebung zwischen der ersten Schiebewelle und der ersten Hauptwelle ermöglicht wird.

Die erste Hauptwelle kann direkt bzw. unmittelbar mit dem Spannelement, wie z.B. einer Spannratsche, verbunden sein. Alternativ kann eine Verbindung der ersten Hauptwelle mit dem Spannelement über einen Wickelwellenadapter oder dergleichen in mittelbarer Form erfolgen.

Die erste Schiebewelle kann mit dem ersten Schiebenwellenende direkt bzw. unmittelbar in dem Gegenhalterelement des Nutzfahrzeugaufbaus angeordnet bzw. fixiert sein. Alternativ kann an dem ersten Schiebenwellenende ein Aufnahmeadapter, vorzugsweise mit einer (Querschnitts-)Geometrie gemäß der ersten Hauptwelle, vorgesehen sein, der mit einem Fixierungsmittel, wie einer Madenschraube oder dergleichen, an dem zweiten Schiebewellenende befestigt ist. Auf diese Wiese könnte, basierend auf gleichen Durchmessern entlang der Schnittstellen, eine vergleichbare Kraftübertragung zwischen dem Gegenhalterelement und dem zweiten Schiebenwellenende erfolgen, wie sie zwischen dem Spannelement und dem zweiten Hauptwellenende zum Spannen der Plane vorgesehen ist.

Des Weiteren kann ein Planenausschnitt an dem ersten Schiebenwellenende der ersten Schiebewelle möglichst klein gehalten werden, um einen Faltenwurf sowie einen Wassereintritt zu minimieren bzw. zumindest weitestgehend zu vermeiden.

In einem weiteren nebengeordneten Aspekt der Erfindung ist ein Nutzfahrzeug, insbesondere Sattelauflieger oder Sattelaufliegergespann, mit einer erfindungsgemäßen Vorrichtung oder einem erfindungsgemäßen Nutzfahrzeugaufbau vorgesehen. Die vorteilhafte Ausgestaltung der Vorrichtung bzw. des Nutzfahrzeugaufbaus ist somit unmittelbar in einem entsprechenden Nutzfahrzeug einsetzbar.

Weitere Details der Erfindung werden mit Blick auf die beigefügten Zeichnungen näher erläutert.

Es zeigen schematisch:
- Fig. 1: Ausschnitt eines Ausführungsbeispiels für eine Vorrichtung eines Nutzfahrzeugaufbaus;
- Fig. 2: Detailansicht des zweiten Hauptwellenendes des Ausführungsbeispiels gemäß Fig. 1;
- Fig. 3: Detailansicht eines ersten Schiebewellenendes des Ausführungsbeispiels gemäß Fig. 1;
- Fig. 4: Darstellung einer expandierten Position der ersten Schiebewelle mit einer Fixierkomponenten;
- Fig. 5: weitere Darstellung zum Ausführungsbeispiel gemäß Fig. 4 mit einer Plane;
- Fig. 6: Darstellung eines Ausführungsbeispiels mit erster und zweiter Schiebewelle;
- Fig. 7a: Detailansicht eines Profils einer Schiebewelle; und
- Fig. 7b: Detailansicht eines Profils einer Hauptwelle.

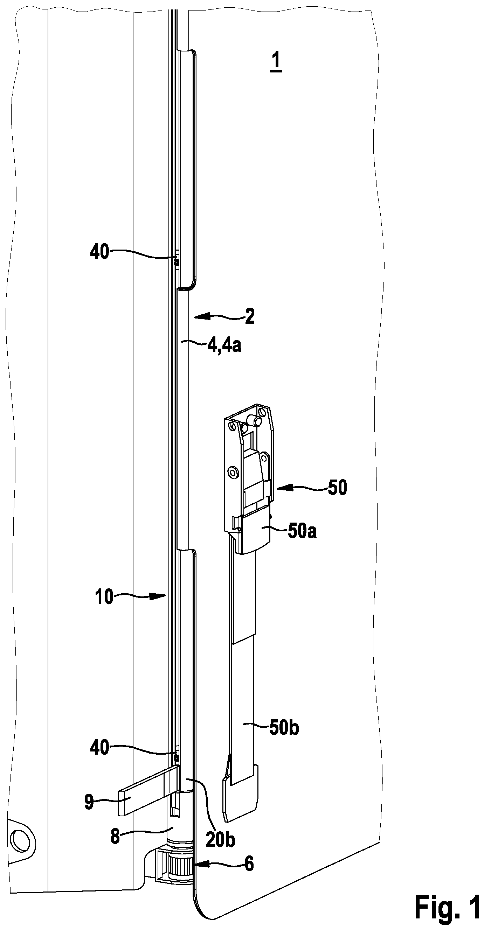

In Fig. 1 ist ein Ausschnitt eines Ausführungsbeispiels für eine Vorrichtung 1 eines Nutzfahrzeugaufbaus gezeigt, insbesondere mit einer Wickelwelleneinheit 10 und einer Plane 2.

Die Wickelwelleneinheit 10 weist eine erste Hauptwelle 20 auf. Die erste Hauptwelle 20 ist mit einem Spannelement 6, vorzugsweise ausgebildet als eine Spannratsche, verbunden.

Das Spannelement 6 kann in Kombination mit einem Wickelwellenadapter 8, an dem zweiten Hauptwellenende 20b, und einem Handteil 9, wie z.B. einem Handgriff oder dergleichen, vorgesehen sein, um ein zweckmäßiges Drehmoment zum Spannen einer Plane 2 aufzubringen.

Des Weiteren weist die erste Hauptwelle 20 eine schlitzförmige Zugangsöffnung 22 auf. In der schlitzförmigen Zugangsöffnung 22 sind mehrere Fixierkomponenten 40 eingebracht. Die Fixierkomponenten 40 sind vorzugsweise derart ausgestaltet, dass sie über die schlitzförmige Zugangsöffnung 22 nicht aus dem Innenprofil der ersten Hauptwelle 20 entfernt werden können. Vielmehr können die Fixierkomponenten 40 an einem ersten Hauptwellenende 20a oder einem zweiten Hauptwellenende 20b aus dem Innenprofil der ersten Hauptwelle 20 entfernt bzw. eingebracht werden.

Die Fixierkomponenten 40 können als Nutensteine bzw. Kulissensteine ausgebildet sein. So ist möglich, die Fixierkomponenten 40 jeweils einzeln an einer beliebigen Position entlang der Wickelwelleneinheit 10 zu verschrauben und damit zu fixieren.

Darüber hinaus weist die Plane 2 einen Keder 4 mit mehreren Kederabschnitt 4a auf. Insbesondere sind die mehreren Kederabschnitte 4a durch Ausschnitte in der Plane 2 ausgebildet. Die Fixierkomponenten 40 sind gemäß Fig. 1 jeweils den Ausschnitten der Plane 2 bzw. den Kederabschnitte 4a zugeordnet.

Die Ausschnitte der Plane 2 entlang des Keders 4 bzw. zwischen den Kederabschnitten 4a sind entlang der ersten Hauptwelle 20 derart ausgestaltet, dass eine Bewegung zwischen der ersten Hauptwelle 20 und der Plane 2 in Längsrichtung der Wickelwelleneinheit 10 stattfinden kann.

Die Plane 2 ist mit einer Raffeinheit 50 ausgestaltet. Die Raffeinheit 50 weist gemäß Fig. 1 eine Klemmratsche 50a und einen Gurt 50b auf. Der Gurt 50b ist an der Plane 2 befestigt bzw. anhand einer weiteren Schnalle umgelenkt. Somit kann die an einem unteren Ende des Nutzfahrzeugaufbaus überstehende Plane 2 zweckmäßig zusammengerafft bzw. zusammengefaltet und verstaut werden.

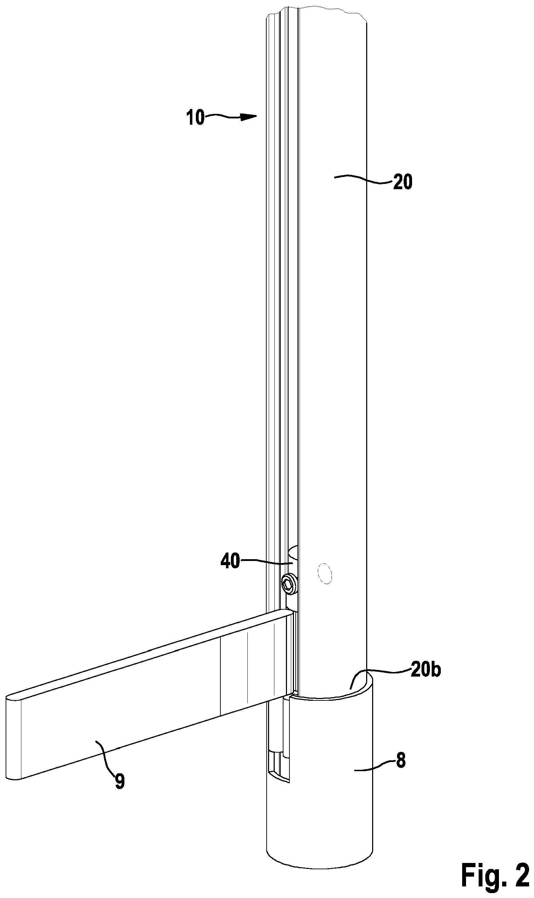

In Fig. 2 ist eine Detailansicht des zweiten Hauptwellenendes 20b des Ausführungsbeispiels gemäß Fig. 1 dargestellt.

In der schlitzförmigen Zugangsöffnung 22 der ersten Hauptwelle 20 ist eine der Fixierkomponenten 40 in Form eines Nutensteins bzw. Kulissensteins dargestellt.

Des Weiteren ist in Fig. 2 die Verbindung der ersten Hauptwelle 20 mit dem Wickelwellenadapter 8 gezeigt, um ein geeignetes Drehmoment zum Spannen einer Plane 2 übertragen zu können. Der Wickelwellenadapter 8 ist dabei mit dem Handteil 9 ausgebildet, wobei der Wickelwellenadapter 8 kraft- und/oder formschlüssig mit dem zweiten Hauptwellenende 20b verbunden sein kann. Des Weiteren kann der Wickelwellenadapter 8 den Bereich des zweiten Hauptwellenendes 20b abschnittsweise umgreifen. Somit kann eine geeignete Drehmomentübertragung zum Spannen einer Plane 2 bereitgestellt werden sowie vorzugsweise einem Aufbiegen der ersten Hauptwelle 20 entlang der schlitzförmigen Zugangsöffnung 22 entgegengewirkt werden kann.

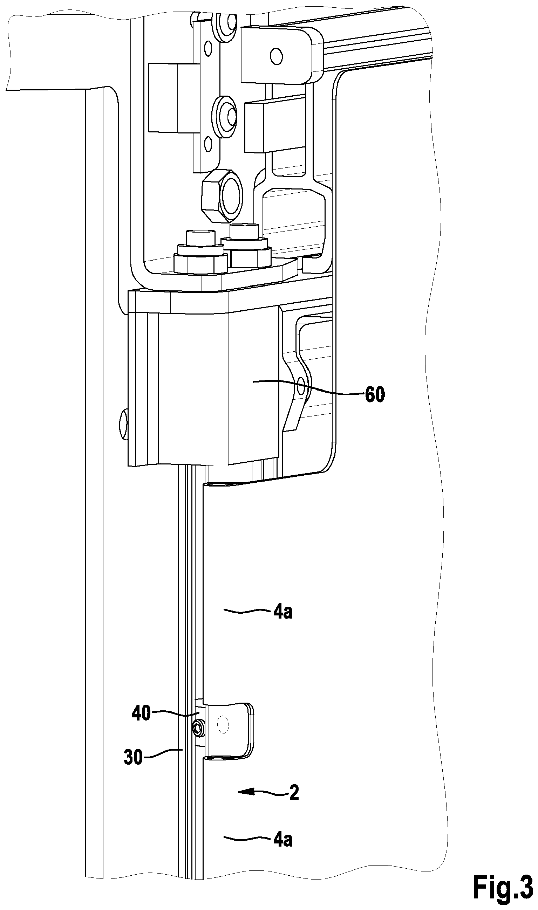

In Fig. 3 ist eine Detailansicht eines ersten Schiebewellenendes 30a des Ausführungsbeispiels gemäß Fig. 1 gezeigt.

Eine erste Schiebewelle 30 ist mit dem ersten Schiebewellenende 30a in einem Gegenhalterelement 60 des Nutzfahrzeugaufbaus bevorzugter Weise fest aufgenommen bzw. angeordnet. Die Plane 2 weist einen Planenausschnitt um das Gegenhalterelement 60 auf, der möglichst klein gehalten wird, insbesondere um einen Wassereintritt zu vermeiden. Das Gegenhalterelement 60 ist vorzugsweise an einem Außenrahmen des Nutzfahrzeugaufbaus angeordnet.

Die erste Schiebewelle 30 weist eine schlitzförmige Zugangsöffnung 32 auf, in der ein Fixierelement 40 in Form eines Nutensteins angeordnet ist. Die Position des Fixierelementes 40 ist einem Ausschnitt der Plane 2, zur Ausbildung von Kederabschnitten 4a, zugeordnet. Sofern die Kederabschnitte 4a der Plane 2 mit der ersten Schiebewelle 30 verbunden sind bzw. die Plane 2 durch die schlitzförmige Zugangsöffnung 32 hindurchragt (in Fig. 3 voneinander getrennt dargestellt), blockiert das Fixierelement 40 das Gleiten der Kederabschnitte 4a in Längsrichtung der ersten Schiebewelle 30. Auf diese Weise kann bei einer Längsverschiebung der ersten Schiebewelle 30 die Plane 2 mittels der Kederabschnitte 4a mitgeführt werden.

Im Vergleich zum Bereich entlang der ersten Hauptwelle 20, wie in Fig. 1 dargestellt, sind entlang der ersten Schiebewelle 30, und insbesondere im Bereich des ersten Schiebewellenendes 30a, die Ausschnitte der Plane zwischen den einzelnen Kederabschnitten 4a derart vorgesehen, dass im Wesentlichen keine Verschiebung zwischen der ersten Schiebewelle 30 und der Plane 2 stattfinden kann.

Der wenigstens eine Ausschnitt der Plane 2, zur Ausbildung von Kederabschnitten 4a entlang des Keders 4, ist im Bereich des ersten Schiebewellenendes 30a korrespondierend zu der Größe des Fixierelementes 40 vorgesehen. Somit kann die Plane 2 mit der ersten Schiebewelle als zumindest im Wesentlichen fest verbunden aufgefasst werden.

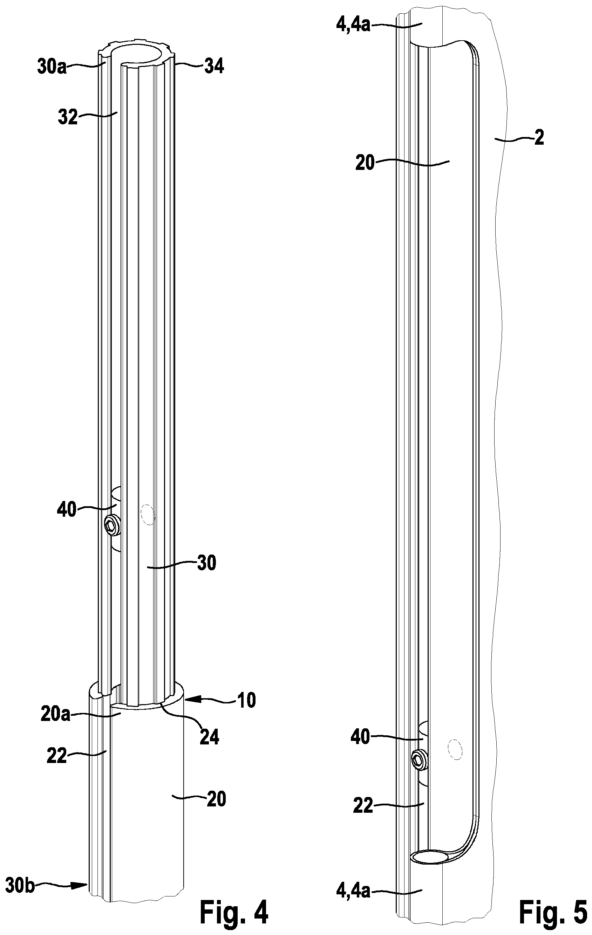

In Fig. 4 ist eine Darstellung einer expandierten Position der ersten Schiebewelle mit einer Fixierkomponente 40 gezeigt.

Gemäß Fig. 4 sind die erste Schiebewelle 30 und die erste Hauptwelle 20 als Hohlwellen mit jeweils einem Innenprofil ausgebildet. Die erste Schiebewelle 30 ist in dem Innenprofil der ersten Hauptwelle 20 aufgenommen. Des Weiteren weist die erste Schiebewelle 30 ein Außenprofil mit einer Nasenstruktur 34 auf, die in ein korrespondierend ausgestaltetes Innenprofil der ersten Hauptwelle 20 mit einer Nutstruktur 24 kraft- und/oder formschlüssig eingreifen kann, sodass die erste Schiebewelle 30 und die erste Hauptwelle 20 ausschließlich in Längsrichtung zueinander verschiebbar sind.

Die jeweiligen Innenprofile der ersten Hauptwelle 20 und der ersten Schiebewelle 30 sind über die zugehörigen schlitzförmige Zugangsöffnung 22; 32 zugänglich. Die schlitzförmigen Zugangsöffnungen 22; 32 sind gemäß Fig. 4 aufeinander ausgerichtet, sodass die Plane 2 mit dem Keder 4 bzw. den Kederabschnitten 4a bis in das Innenprofil bzw. den Hohlraum der ersten Schiebewelle 30 hineinragen kann.

Vorzugsweise ist die erste Schiebewelle 30 mit dem Nutzfahrzeugaufbau bzw. dem Außenrahmen fest verbunden, insbesondere über das Gegenhalterelement 60 wie in Fig. 3 gezeigt. So kann die Hauptwelle 20 entlang der Schiebewelle 30 in Längsrichtung verschoben werden.

Die Fixierelemente 40 greifen bis in das Innenprofil der ersten Schiebewelle 30 bzw. der ersten Hauptwelle 20 ein und blockieren diese für eine Verschiebung des Keders 4 bzw. der Kederabschnitte 4a. Sofern bevorzugter Weise das erste Schiebewellenende 30a fest mit dem Außenrahmen bzw. einem Gegenhalterelement 60 des Nutzfahrzeugaufbaus verbunden ist, ist die erste Hauptwelle 20 in Längsrichtung gegenüber der ersten Schiebewelle 30 beweglich, um eine Höhenverstellung der Folie 2 bzw. des Nutzfahrzeugaufbaus bereitzustellen.

Indem die Fixierelemente 40 in den Ausschnitten der Plane 2 und innerhalb der Innenprofile der ersten Hauptwelle 20 und der ersten Schiebewelle 30 angeordnet sind, kann eine maximale Längsverschiebung zwischen der ersten Hauptwelle 20 und der ersten Schiebewelle 30 begrenzt werden. Die Begrenzung der Längsverschiebung erfolgt durch einen Kontakt zwischen einem Kederabschnitt 4a und einem der Fixierelemente 40, die in dem Innenprofil der ersten Hauptwelle 20 und/oder der ersten Schiebewelle 30 angeordnet sind. Auf diese Weise kann auch einem Herausfallen z.B. der ersten Hauptwelle 20 aus der ersten Schiebewelle 30 vorgebeugt werden.

In Fig. 5 ist eine weitere Darstellung zum Ausführungsbeispiel gemäß Fig. 4 mit einer Plane 2 gezeigt.

Indem das Fixierelement 40 in der ersten Hauptwelle 20 mit einem darunterliegenden Kederabschnitt 4a eingreift, wird eine maximale Höhe der Plane 2 bzw. des Nutzfahrzeugaufbaus bestimmt. Eine maximale Relativverschiebung zwischen der ersten Hauptwelle 20 und der ersten Schiebewelle 30 ist erreicht. Sofern das Fixierelement 40 mit einem darüber liegenden Kederabschnitt 4a in Eingriff kommt, wird eine minimale Höhe bzw. Längsverschiebung erreicht.

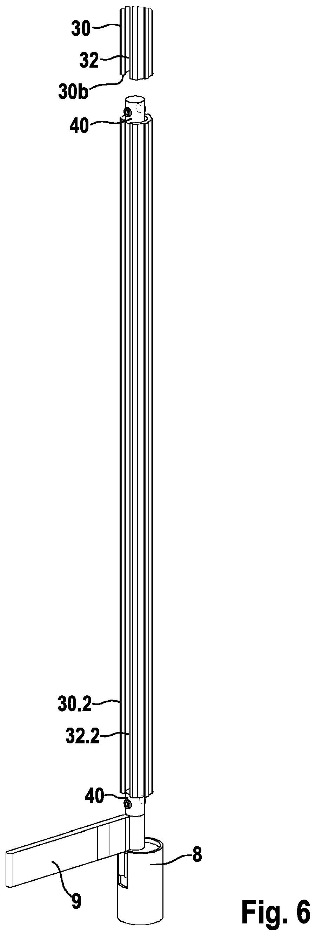

In Fig. 6 ist ein Ausführungsbeispiel mit der ersten Schiebewelle 30 und einer zweiten Schiebewelle 30.2 gezeigt.

Die erste Schiebewelle 30 und die zweite Schiebewelle 30.2 sind hierbei übereinander angeordnet. Entlang der ersten Hauptwelle 20 (in Fig. 6 nicht dargestellt) sind die erste Schiebewelle 30 und die zweite Schiebewelle 30.2 demnach in Längsrichtung der ersten Hauptwelle 20 zueinander versetzt vorgesehen.

Die zweite Schiebewelle 30.2 ist gemäß Fig. 6 in dem Bereich des zweiten Hauptwellenendes 20b angeordnet. So kann die zweite Schiebewelle 30.2 in der Nähe zu dem Handteil 9 und dem Wickelwellenadapter 8 vorgesehen sein. Auf diese Weise kann anhand der zweiten Schiebewelle 30.2 eine Stabilität bzw. eine Steifigkeit der ersten Hauptwelle 20 im Bereich der Kraftübertragung von dem Spannelement 6 auf die erste Hauptwelle 20 optimiert werden.

Die zweite Schiebewelle 30.2 ist vorzugsweise mit einem identischen Querschnitt im Vergleich zu der ersten Schiebewelle 30 ausgebildet. So weist die zweite Schiebewelle 30.2 ebenfalls eine schlitzförmige Zugangsöffnung 32.2 auf. Dementsprechend kann eine Fixierkomponente 40 in die zweite Schiebewelle 30.2 eingebracht werden.

Darüber hinaus können die erste Schiebewelle 30 und die zweite Schiebewelle 30.2 mit identischen Längen oder unterschiedlichen Längen ausgebildet sein.

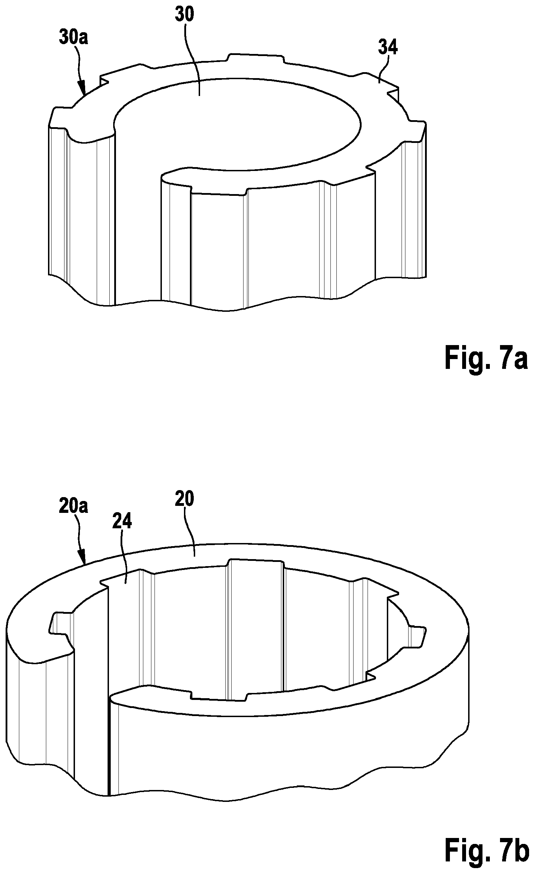

In Fig. 7a ist eine Detailansicht eines Profils einer Schiebewelle 30 gezeigt.

Die erste Schiebewelle 30 ist als ein Hohlprofil im Zuge eines Extrusions- bzw. Strangpressverfahrens herstellbar.

Das Innenprofil der ersten Schiebewelle 30 ist über die schlitzförmige Zugangsöffnung 32, welche sich über die gesamte Länge der ersten Schiebewelle 30 erstreckt, zugänglich.

Das Außenprofil der ersten Schiebewelle 30 ist mit einer Nasenstruktur 34 ausgebildet. Entlang des Außenumfangs der ersten Schiebewelle 30 erstrecken sich mehrere rechteckförmige Nasen in Längsrichtung der ersten Schiebewelle 30. Die Nasenstrukturen 34 sind radial bzw. umfangsseitig verteilt angeordnet. Somit ist eine einfache, kostengünstige Herstellung der ersten Schiebewelle 30 sichergestellt.

Die Nasenstrukturen 34 sind vorzugsweise als rechteckförmige Nasenstrukturen 34 ausgebildet, um einen Rechteckverzahnung bereitzustellen. Die rechtwinklige Ausgestaltung der Flanken der Nasenstrukturen ermöglicht eine maximale Kraftübertragung und beugt einem Durchrutschen im zerstörungsfreien Zustand der ersten Schiebewelle 30 vor.

In Fig. 7b ist eine Detailansicht eines Profils einer Hauptwelle 20 veranschaulicht.

Die erste Hauptwelle 20 ist ebenfalls als ein Hohlprofil im Zuge eines Extrusions- bzw. Strangpressverfahrens herstellbar.

Das Innenprofil der ersten Hauptwelle 20 ist über die schlitzförmige Zugangsöffnung 22, welche sich über die gesamte Länge der ersten Hauptwelle 20 erstreckt, zugänglich.

Das Innenprofil der ersten Hauptwelle 20 ist mit Nutstrukturen 24, korrespondierend zu den Nasenstrukturen 34 der ersten Schiebewelle 30, ausgebildet. Demzufolge sind die Nutstrukturen 24 vorzugsweise als rechteckförmige Nutstrukturen vorgesehen und radial bzw. entlang des Umfangs des Innenprofils der ersten Hauptwelle 20 verteilt ausgebildet.

Auf diese Weise ist eine ausschließliche Längsverschieblichkeit zwischen der wenigstens einen ersten Hauptwelle 20 und der wenigstens einen ersten Schiebewelle 30 gewährleistet.

Zusammenfassend stellt die vorliegende Erfindung eine einfach und kostengünstig herzustellende Vorrichtung zum Spannen einer höhenverstellbaren Plane 2 bereit. Der Nutzfahrzeugaufbau kann mittels der erfindungsgemäßen Vorrichtung 1 auf eine beliebige Höhe eingestellt und die Plane 2 zweckmäßig gespannt werden.

Mittels einem Eingriff zwischen der ersten Hauptwelle 20, der ersten Schiebewelle 30, wenigstens einer Fixierkomponente 40 und der Plane 2 mit Kederabschnitten 4a kann auf vorteilhafte Weise eine maximale und/oder minimale Höhenverstellung der Plane 2 bzw. des Nutzfahrzeugaufbaus bereitgestellt werden.

### Bezugszeichenliste

- 1: Vorrichtung
- 2: Plane
- 4: Keder
- 6: Spannelement
- 8: Wickelwellenadapter
- 9: Handteil
- 10: Wickelwelleneinheit
- 20: Hauptwelle
- 20a: erstes Hauptwellenende
- 20b: zweites Hauptwellenende
- 22: schlitzförmige Zugangsöffnung der Hauptwelle
- 24: Nutstruktur
- 30: erste Schiebewelle
- 30a: erstes Schiebewellenende
- 30b: zweites Schiebewellenende
- 30.2: zweite Schiebewelle
- 32: schlitzförmige Zugangsöffnung der ersten Schiebewelle
- 32.2: schlitzförmige Zugangsöffnung der zweiten Schiebewelle
- 34: Nasenstruktur
- 40: Fixierkomponente
- 50: Raffeinheit
- 50a: Klemmratsche
- 50b: Gurt
- 60: Gegenhalterelement

## Patentansprüche

1. Vorrichtung (1) zum Spannen einer höhenverstellbaren Plane (2) eines Nutzfahrzeugaufbaus
mit einem Spannelement (6) und wenigstens einer Wickelwelleneinheit (10), die mit dem Spannelement (6) kraft- und/oder form- und/oder reibschlüssig verbunden ist zum Aufbringen eines Drehmomentes auf die Wickelwelleneinheit (10) entlang einer Längsachse der Wickelwelleneinheit (10),
wobei die Wickelwelleneinheit (10) wenigstens eine erste Hauptwelle (20), mit einem ersten Hauptwellenende (20a) und einem zweiten Hauptwellenende (20b), und wenigstens eine erste Schiebewelle (30), mit einem ersten Schiebewellenende (30a) und einem zweiten Schiebewellenende (30b), aufweist,
wobei die erste Hauptwelle (20) und die erste Schiebewelle (30) jeweils als eine geschlitzte Hohlwelle mit einem Innenprofil zur Aufnahme wenigstens eines Keders (4) der Plane (2) ausgebildet sind und
wobei die erste Schiebewelle (30) in dem Innenprofil der ersten Hauptwelle (20) aufgenommen ist und ein Außenprofil der ersten Schiebewelle (30) derart in das Innenprofil der ersten Hauptwelle (20) eingreift, dass die Schiebewelle und die erste Hauptwelle ausschließlich in Längsrichtung zueinander bewegbar sind
**dadurch gekennzeichnet, dass**
zur Ausbildung eines kraft- und/oder formschlüssigen Eingriffs der ersten Schiebewelle (30) mit der ersten Hauptwelle (20)
- das Innenprofil der ersten Hauptwelle (20) wenigstens eine Nutstruktur (24) und die erste Schiebewelle (30) ein Außenprofil mit wenigstens einer korrespondierenden Nasenstruktur (34) aufweisen oder
- das Innenprofil der ersten Hauptwelle (20) wenigstens eine Nasenstruktur und die erste Schiebewelle (30) ein Außenprofil mit wenigstens einer Nutstruktur aufweisen.

2. Vorrichtung nach Anspruch 1,
**dadurch gekennzeichnet, dass**
das Innenprofil der ersten Hauptwelle (20) mehrere radial verteilte rechteckförmige Längsnuten und die erste Schiebewelle (30) ein Außenprofil mit mehreren radial verteilten, rechteckförmigen Längsnasen aufweist.

3. Vorrichtung nach Anspruch 1 oder 2,
**dadurch gekennzeichnet, dass**
wenigstens eine Fixierkomponente mit der ersten Schiebewelle (30) und/oder der ersten Hauptwelle (20) verbindbar ist zur Fixierung der Position der ersten Hauptwelle (20) in Längsrichtung gegenüber der ersten Schiebewelle (30).

4. Vorrichtung nach Anspruch 3,
**dadurch gekennzeichnet, dass**
die wenigstens eine Fixierkomponente (40) derart ausgebildet ist, insbesondere als ein Nutenstein ausgebildet ist, sodass die Fixierkomponente (40) in das Innenprofil der ersten Schiebewelle (30) einbringbar und mit dem Innenprofil der ersten Schiebewelle (30) derart kraft- und/oder formschlüssig verschränkbar ist, sodass das Innenprofil der ersten Schiebewelle (30) in Längsrichtung blockiert ist, insbesondere für eine Hindurchführung des Keders (4) der Plane (2) durch das Innenprofil der ersten Schiebewelle (30) blockiert ist.

5. Vorrichtung nach einem der vorhergehenden Ansprüche,
**dadurch gekennzeichnet, dass**
die erste Hauptwelle (20) und die erste Schiebewelle (30) jeweils als Strangpressprofile oder als Extrusionsprofile ausgebildet sind.

6. Vorrichtung nach einem der vorhergehenden Ansprüche,
**dadurch gekennzeichnet, dass**
die erste Hauptwelle (20) und die erste Schiebewelle (30) identische Längen oder unterschiedliche Längen aufweisen, insbesondere sodass die erste Schiebewelle (30) kürzer ist als die erste Hauptwelle (20).

7. Vorrichtung nach einem der vorhergehenden Ansprüche,
**dadurch gekennzeichnet, dass**
eine zweite Schiebewelle (30.2) vorgesehen ist, wobei die erste Schiebewelle (30) und die zweite Schiebewelle (30.2) in Längsrichtung der Hauptwelle (20) übereinander angeordnet sind, und die zweite Schiebewelle (30.2) insbesondere in dem Bereich des zweiten Hauptwellenendes (20b) angeordnet ist.

8. Nutzfahrzeugaufbau, insbesondere für den Einsatz mit Nutzfahrzeugen wie Sattelauflieger oder Sattelaufliegergespannen, mit einer Plane (2), geeignet zum Verschließen und Freigeben einer Ladeöffnung, und mit einer Vorrichtung gemäß einem der vorhergehenden Ansprüche.

9. Nutzfahrzeugaufbau nach Anspruch 8,
**dadurch gekennzeichnet, dass**
die Plane (2) abschnittsweise mit der Wickelwelleneinheit (10) verbindbar ist, insbesondere im Bereich des ersten Schiebewellenendes (30a) mit der ersten Schiebewelle (30) verbindbar ist.

10. Nutzfahrzeugaufbau nach Anspruch 8 oder 9,
**dadurch gekennzeichnet, dass**
die Plane (2) an wenigstens einem horizontalen Ende mit wenigstens einem Keder (4) zur geführten Aufnahme in der Wickelwelleneinheit (10), insbesondere in dem Innenprofil der ersten Hauptwelle (20) und/oder der ersten Schiebewelle (30), ausgestaltet ist,
wobei die Plane (2) entlang des Keders (4) wenigstens einen Ausschnitt aufweist, sodass eine Mehrzahl von Kederabschnitten (4a) ausgebildet ist.

11. Nutzfahrzeugaufbau nach Anspruch 10,
**dadurch gekennzeichnet, dass**
die wenigstens eine Fixierkomponente (40) zum kraft- und/oder formschlüssigen Eingriff mit der Wickelwelleneinheit (10), insbesondere mit der ersten Schiebewelle (30) und/oder der ersten Hauptwelle (20), und mit wenigstens einem der Kederabschnitte (4a) vorgesehen ist, sodass
- die Plane (2) bei einer Längsbewegung zwischen der ersten Schiebewelle (30) und der ersten Hauptwelle (20) mitführbar ist, und/oder
- eine Längsbewegung zwischen der ersten Schiebewelle (30) und der ersten Hauptwelle (20), insbesondere in Kombination mit der Plane (2), begrenzbar ist.

12. Nutzfahrzeugaufbau nach einem der Ansprüche 8 bis 11,
**dadurch gekennzeichnet, dass**
die Plane (2) an einem unteren Endbereich, im Bereich des zweiten Hauptwellenendes (20b), wenigstens eine Raffeinheit (50) aufweist, insbesondere mit einer Klemmratsche (50a) und einem Gurt (50b), sodass ein überstehender Teil der Plane (2) bedarfsweise zusammenraffbar ist.

13. Nutzfahrzeugaufbau nach einem der Ansprüche 8 bis 12,
**dadurch gekennzeichnet, dass**
die Plane (2) eine Seitenplane des Nutzfahrzeuges ist.

14. Nutzfahrzeugaufbau nach einem der Ansprüche 8 bis 13,
**dadurch gekennzeichnet, dass**
die erste Hauptwelle (20) an dem zweiten Hauptwellenende (20b) fixiert ist, insbesondere mit dem Spannelement (6) mittelbar oder unmittelbar verbunden ist, und die erste Schiebewelle (30) an dem ersten Schiebewellenende (30a) fixiert ist, insbesondere an einem Gegenhalterelement (60) des Nutzfahrzeugaufbaus mittelbar oder unmittelbar befestigt ist.

15. Nutzfahrzeug, insbesondere Sattelauflieger oder Sattelaufliegergespann, mit einer Vorrichtung oder einem Nutzfahrzeugaufbau nach einem der vorhergehenden Ansprüche.

## Claims

1. A device (1) for tensioning a height-adjustable tarpaulin (2) of a commercial vehicle superstructure having a tensioning element (6) and at least one winding shaft unit (10), which is connected force-fittingly and/or form-fittingly and/or frictionally to the tensioning element (6) in order to apply a torque to the winding shaft unit (10) along a longitudinal axis of the winding shaft unit (10),
wherein the winding shaft unit (10) has at least one first main shaft (20), having a first main shaft end (20a) and a second main shaft end (20b), and at least one first sliding shaft (30), having a first sliding shaft end (30a) and a second sliding shaft end (30b), wherein the first main shaft (20) and the first sliding shaft (30) are each designed as a slotted hollow shaft with an inner profile for accommodating at least one keder (4) of the tarpaulin (2), and
wherein the first sliding shaft (30) is accommodated in the inner profile of the first main shaft (20), and an outer profile of the first sliding shaft (30) engages in the inner profile of the first main shaft (20) such that the sliding shaft and the first main shaft are movable relative to one another exclusively in the longitudinal direction
**characterised in that**
to form a force-fitting and/or form-fitting engagement of the first sliding shaft (30) with the first main shaft (20),
- the inner profile of the first main shaft (20) has at least one groove structure (24), and the first sliding shaft (30) has an outer profile having at least one corresponding nose structure (34)
or
- the inner profile of the first main shaft (20) has at least one nose structure, and the first sliding shaft (30) has an outer profile having at least one groove structure.

2. The device according to Claim 1,
**characterised in that**
the inner profile of the first main shaft (20) has multiple radially distributed rectangular longitudinal grooves, and the first sliding shaft (30) has an outer profile with multiple radially distributed, rectangular longitudinal noses.

3. The device according to Claim 1 or 2,
**characterised in that**
at least one fixing component can be connected to the first sliding shaft (30) and/or the first main shaft (20) in order to fix the position of the first main shaft (20) in the longitudinal direction relative to the first sliding shaft (30).

4. The device according to Claim 3,
**characterised in that**
the at least one fixing component (40) is designed, in particular as a sliding block, such that the fixing component (40) can be introduced into the inner profile of the first sliding shaft (30) and interlocked force-fittingly and/or form-fittingly with the inner profile of the first sliding shaft (30) such that the inner profile of the first sliding shaft (30) is blocked in the longitudinal direction, in particular is blocked for the passage of the keder (4) of the tarpaulin (2) through the inner profile of the first sliding shaft (30) .

5. The device according to any one of the preceding claims,
**characterised in that**
the first main shaft (20) and the first sliding shaft (30) are each designed as extruded profiles or as extrusion profiles.

6. The device according to any one of the preceding claims,
**characterised in that**
the first main shaft (20) and the first sliding shaft (30) have identical lengths or different lengths, in particular so that the first sliding shaft (30) is shorter than the first main shaft (20).

7. The device according to any one of the preceding claims,
**characterised in that**
a second sliding shaft (30.2) is provided, wherein the first sliding shaft (30) and the second sliding shaft (30.2) are arranged one above the other in the longitudinal direction of the main shaft (20), and the second sliding shaft (30.2) is in particular arranged in the region of the second main shaft end (20b).

8. A commercial vehicle superstructure, in particular for use with commercial vehicles such as semi-trailers or semi-trailer combinations, having a tarpaulin (2), suitable for closing and opening a loading opening, and having a device according to one of the preceding claims.

9. The commercial vehicle superstructure according to Claim 8,
**characterised in that**
the tarpaulin (2) can be connected to the winding shaft unit (10) in some sections, in particular can be connected to the first sliding shaft (30) in the region of the first sliding shaft end (30a).

10. The commercial vehicle superstructure according to Claim 8 or 9,
**characterised in that**
the tarpaulin (2) is designed with at least one keder (4) at at least one horizontal end for guided accommodation in the winding shaft unit (10), in particular in the inner profile of the first main shaft (20) and/or the first sliding shaft (30), wherein the tarpaulin (2) has at least one cut-out along the keder (4) so that a plurality of keder sections (4a) is formed.

11. The commercial vehicle superstructure according to Claim 10,
**characterised in that**
the at least one fixing component (40) is provided for force-fitting and/or form-fitting engagement with the winding shaft unit (10), in particular with the first sliding shaft (30) and/or the first main shaft (20), and with at least one of the keder sections (4a), so that
- the tarpaulin (2) can be carried along when there is a longitudinal movement between the first sliding shaft (30) and the first main shaft (20),
and/or
- a longitudinal movement between the first sliding shaft (30) and the first main shaft (20), in particular in combination with the tarpaulin (2), can be limited.

12. The commercial vehicle superstructure according to any one of Claims 8 to 11,
**characterised in that**
the tarpaulin (2) has at least one gathering unit (50), in particular with a clamping ratchet (50a) and a strap (50b), at a lower end region, in the region of the second main shaft end (20b), so that a protruding part of the tarpaulin (2) can be gathered together if required.

13. The commercial vehicle superstructure according to any one of Claims 8 to 12,
**characterised in that**
the tarpaulin (2) is a side tarpaulin of the commercial vehicle.

14. The commercial vehicle superstructure according to any one of Claims 8 to 13,
**characterised in that**
the first main shaft (20) is fixed at the second main shaft end (20b), in particular is connected directly or indirectly to the tensioning element (6), and the first sliding shaft (30) is fixed at the first sliding shaft end (30a), in particular is fastened directly or indirectly to a counter holder element (60) of the commercial vehicle superstructure.

15. A commercial vehicle, in particular a semi-trailer or semi-trailer combination, having a device or a commercial vehicle superstructure according to any one of the preceding claims.

## Revendications

1. Dispositif (1), destiné à tendre une bâche (2) réglable en hauteur d'une carrosserie de véhicule utilitaire, pourvu d'un élément tendeur (6) et d'au moins une unité (10) d'arbre d'enroulement, qui est assemblée avec l'élément tendeur (6) par complémentarité de force et / ou de forme et / ou par friction, pour appliquer un couple de rotation sur l'unité (10) d'arbre d'enroulement, le long d'un axe longitudinal de l'unité (10) d'arbre d'enroulement, l'unité (10) d'arbre d'enroulement comportant au moins un premier arbre principal (20), pourvu d'une première extrémité (20a) d'arbre principal et d'une deuxième extrémité (20b) d'arbre principal, et au moins un premier arbre baladeur (30), pourvu d'une première extrémité (30a) d'arbre baladeur et d'une deuxième extrémité (30b) d'arbre baladeur,
le premier arbre principal (20) et le premier arbre baladeur (30) étant conçus chacun sous la forme d'un arbre creux fendu, doté d'un profilé intérieur destiné à recevoir au moins un passepoil (4) de la bâche (2) et
le premier arbre baladeur (30) étant réceptionné dans le profilé intérieur du premier arbre principal (20) et un profilé extérieur du premier arbre baladeur (30) s'engageant dans le profilé intérieur du premier arbre principal (20) de telle sorte que l'arbre baladeur et le premier arbre principal soient déplaçables l'un par rapport à l'autre exclusivement dans la direction longitudinale
**caractérisé en ce que**
pour créer un engagement par complémentarité de force et / ou de forme du premier arbre baladeur (30) avec le premier arbre principal (20)
- le profilé intérieur du premier arbre principal (20) comporte au moins une structure rainurée (24) et le premier arbre baladeur (30) comporte un profilé extérieur doté d'au moins une structure en tenon (34) correspondante ou
- le profilé intérieur du premier arbre principal (20) comporte au moins une structure en tenon et le premier arbre baladeur (30) comporte un profilé extérieur doté d'au moins une structure rainurée.

2. Dispositif selon la revendication 1,
**caractérisé en ce que**
le profilé intérieur du premier arbre principal (20) comporte plusieurs rainures longitudinales de forme rectangulaire, distribuées en direction radiale et le premier arbre baladeur (30) comporte un profilé extérieur doté de plusieurs tenons longitudinaux de forme rectangulaire, distribués en direction radiale.

3. Dispositif selon la revendication 1 ou 2,
**caractérisé**
**en ce qu'**au moins un composant de fixation est susceptible d'être assemblé avec le premier arbre baladeur (30) et / ou le premier arbre principal (20), pour fixer la position du premier arbre principal (20) dans la direction longitudinale, par rapport au premier arbre baladeur (30).

4. Dispositif selon la revendication 3,
**caractérisé en ce que**
l'au moins un composant de fixation (40) est conçu de telle sorte, est conçu notamment sous la forme d'un coulisseau, de manière que le composant de fixation (40) soit susceptible d'être introduit dans le profilé intérieur du premier arbre baladeur (30) et soit susceptible d'être imbriqué par complémentarité de force et / ou de forme avec le profilé intérieur du premier arbre baladeur (30), pour que le profilé intérieur du premier arbre baladeur (30) soit bloqué dans la direction longitudinale, notamment soit bloqué pour faire passer le passepoil (4) de la bâche (2) à travers le profilé intérieur du premier arbre baladeur (30) .

5. Dispositif selon l'une quelconque des revendications précédentes,
**caractérisé en ce que**
le premier arbre principal (20) et le premier arbre baladeur (30) sont conçus chacun sous la forme de profilés filés ou de profilés extrudés.

6. Dispositif selon l'une quelconque des revendications précédentes,
**caractérisé en ce que**
le premier arbre principal (20) et le premier arbre baladeur (30) présentent des longueurs identiques ou différentes longueurs, notamment de sorte que le premier arbre baladeur (30) soit plus court que le premier arbre principal (20).

7. Dispositif selon l'une quelconque des revendications précédentes,
**caractérisé**
**en ce qu'**il est prévu un deuxième arbre baladeur (30.2), le premier arbre baladeur (30) et le deuxième arbre baladeur (30.2) étant superposés dans la direction longitudinale de l'arbre principal (20), et le deuxième arbre baladeur (30.2) étant placé notamment dans la zone de la deuxième extrémité (20b) de l'arbre principal.

8. Carrosserie de véhicule utilitaire, notamment destinée à être utilisée avec des véhicules utilitaires, comme des semi-remorques ou des attelages de semi-remorques, pourvue d'une bâche (2), apte à fermer ou à libérer une ouverture de chargement et pourvue d'un dispositif selon l'une quelconque des revendications précédentes.

9. Carrosserie de véhicule utilitaire selon la revendication 8,
**caractérisée en ce que**
la bâche (2) est susceptible d'être assemblée par endroits avec l'unité (10) d'arbre d'enroulement, notamment est susceptible d'être assemblée dans la zone de la première extrémité (30a) d'arbre baladeur avec le premier arbre baladeur (30).

10. Carrosserie de véhicule utilitaire selon la revendication 8 ou 9,
**caractérisée en ce que**
la bâche (2) est conçue sur au moins une extrémité horizontale avec au moins un passepoil (4) pour le logement guidé dans l'unité (10) d'arbre d'enroulement, notamment dans le profilé intérieur du premier arbre principal (20) et / ou du premier arbre baladeur (30),
la bâche (2) comportant le long du passepoil (4) au moins une échancrure, de sorte qu'une pluralité de section de passepoils (4a) soit conçue.

11. Carrosserie de véhicule utilitaire selon la revendication 10,
**caractérisée en ce que**
l'au moins un composant de fixation (40) est prévu pour l'engagement par complémentarité de force et / ou
de forme avec l'unité (10) d'arbre d'enroulement, notamment avec le premier arbre baladeur (30) et / ou
avec le premier arbre principal (20), et avec au moins l'une des sections de passepoils (4a) de telle sorte
- que lors d'un déplacement longitudinal, la bâche (2) soit susceptible d'être co-entraînée entre le premier arbre baladeur (30) et le premier arbre principal (20), et / ou
- qu'un déplacement longitudinal entre le premier arbre baladeur (30) et le premier arbre principal (20), notamment en association avec la bâche (2), puisse être limité.

12. Carrosserie de véhicule utilitaire selon l'une quelconque des revendications 8 à 11, **caractérisée en ce que**
la bâche (2) comporte sur une zone d'extrémité inférieure, dans la zone de la deuxième extrémité (20b) de l'arbre principal, au moins une unité de fronçage (50), pourvue notamment d'une patte de serrage (50a) et d'une sangle (50b), de telle sorte qu'une partie débordante de la bâche (2) puisse être froncée en cas de besoin.

13. Carrosserie de véhicule utilitaire selon l'une quelconque des revendications 8 à 12,
**caractérisée en ce que**
la bâche (2) est une bâche latérale du véhicule utilitaire.

14. Carrosserie de véhicule utilitaire selon l'une quelconque des revendications 8 à 13,
**caractérisée en ce que**
le premier arbre principal (20) est fixé sur la deuxième extrémité (20b) d'arbre principal, notamment est assemblé indirectement ou directement avec l'élément tendeur (6), et le premier arbre baladeur (30) est fixé sur la première extrémité (30a) d'arbre baladeur, notamment est attaché indirectement ou directement sur un élément de fixation antagoniste (60) de la carrosserie de véhicule utilitaire.

15. Véhicule utilitaire, notamment semi-remorque ou attelage de semi-remorques, pourvu d'un dispositif ou d'une carrosserie de véhicule utilitaire selon l'une quelconque des revendications précédentes.
